# FASCICULE DE BREVET EUROPEEN

(11) **EP 1 833 938 B1**
(45) Date de publication et mention de la délivrance du brevet: **23.04.2008**
(21) Numéro de dépôt: 05824586.1
(22) Date de dépôt: 06.12.2005
(51) Int. Cl.: C09J 5/02

(54) **PROCEDE DE COLLAGE DE DEUX SURFACES LIBRES, RESPECTIVEMENT DE PREMIER ET SECOND SUBSTRATS DIFFERENTS**
VERFAHREN ZUM VERBINDEN ZWEIER FREIER OBERFLÄCHEN EINES ERSTEN BEZIEHUNGSWEISE ZWEITEN SUBSTRATS
METHOD FOR BONDING TWO FREE SURFACES, RESPECTIVELY OF FIRST AND SECOND DIFFERENT SUBSTRATES

(30) Priorité: 15.12.2004 FR 0413353
(43) Date de publication de la demande: 19.09.2007
(73) Titulaire: COMMISSARIAT A L'ENERGIE ATOMIQUE, 75015 Paris (FR)
(72) Inventeur: KOSTRZEWA, Marek, F-38100 Grenoble (FR); DI CIOCCIO, Léa, F-38330 Saint Ismier (FR); DELAPIERRE, Guillaume, F-38450 Vif (FR)
(74) Mandataire: Jouvray, Marie-Andrée
(86) Numéro de dépôt international: PCT/FR2005/003049
(87) Numéro de publication internationale: WO 2006/064106

(56) Documents cités:
- US-A- 4 521 444
- US-B1- 6 190 778

## Description

### Domaine technique de l'invention

L'invention concerne un procédé de collage de deux surfaces libres, respectivement de premier et second substrats différents.

### État de la technique

Dans le domaine de la microélectronique, on assiste, de plus en plus, à une nécessité de densification des composants électroniques sur substrats, notamment en intégrant des nombreuses fonctions hétérogènes, telles que des fonctions optiques, des circuits de haute fréquence, des circuits moléculaires et des circuits bioéléctroniques. A titre d'exemple, dans le domaine optoélectronique, il est particulièrement intéressant d'intégrer des fonctions optoélectroniques sur des substrats en silicium, c'est-à-dire de reporter des matériaux semi-conducteurs en phosphure d'indium (InP) ou en arséniure de gallium (GaAs) sur des substrats en silicium. Cela permettrait, en effet, de réaliser des interconnections optiques entre les différents matériaux semi-conducteurs. De même, il existe un intérêt croissant d'utiliser un substrat en verre, en nitrure d'aluminium (AIN) ou en alumine (Al₂O₃), comme support final pour des dispositifs nécessitant une forte dissipation de chaleur, tels que les transistors à haute mobilité électronique (HEMT), les composants de puissance...

Or, actuellement, il n'existe pas de substrat universel, équivalent à un substrat de silicium et sur lequel pourraient être épitaxiés différents matériaux semi-conducteurs. En effet, le matériau constituant le substrat impose son paramètre de maille à la couche épitaxiée et la combinaison de matériaux présentant des paramètres de mailles trop différents n'est pas possible. De plus, quand l'épitaxie est hétérogène, la différence entre les coefficients de dilatation thermique du substrat et de la couche épitaxiée rend l'empilement inutilisable au-delà d'une certaine gamme de températures.

Ainsi, une des solutions actuelles consiste à fabriquer les composants sur un substrat adapté et de coller les composants sur un autre substrat. Le collage peut, par exemple, être réalisé par collage métallique, au moyen d'une colle époxy ou par collage moléculaire. Le collage métallique et le collage au moyen d'une colle époxy présentent, cependant, de nombreuses limites. Ainsi, ils ne permettent pas d'assurer une liaison optique entre le substrat et le composant collé sur le substrat.

Le collage moléculaire représente donc, actuellement, une voie intéressante pour joindre deux substrats. A titre d'exemple, dans le brevet US6190778, le collage moléculaire de deux substrats en silicium est obtenu en revêtant les surfaces des deux substrats, rendues lisses et oxydées, par une couche mono-moléculaire d'un organosilane contenant du soufre. Les deux surfaces sont ensuite mises en contact et subissent un traitement thermique à 170°C de manière à créer des liaisons covalentes entre deux atomes de soufre appartenant respectivement aux couches mono-moléculaires des deux substrats. Un tel procédé de collage moléculaire ne fonctionne, cependant, que dans le cas où les surfaces des deux substrats peuvent être oxydées et il nécessite de fonctionnaliser les deux surfaces avec un composé organosilane.

Selon l'article "A model for the silicon wafer bonding process" de R. Stengl et al. (Japanese Journal of Applied Physics, Vol 38, N°10, 1989, pages 1735-1741), les surfaces de deux plaquettes de silicium, polies, ultra-propres et rendues hydrophiles, peuvent adhérer l'une à l'autre, à température ambiante et sans nécessiter l'application d'une force additionnelle. Ainsi, en étudiant l'énergie de liaison entre des plaquettes en silicium en fonction de la température, R. Stengl et al. ont développé un modèle de collage moléculaire entre deux plaquettes en silicium. Ce modèle de collage moléculaire est basé sur l'hypothèse que le procédé initial de liaison entre les deux plaquettes se produit via la formation de liaisons hydrogènes entre des molécules d'eau adsorbées à la surface oxydée des plaquettes en silicium, puis en chauffant l'ensemble de manière à former des liaisons covalentes Si-O-Si entre les deux substrats. Un tel modèle s'applique au collage de deux plaquettes de silicium identiques et nécessite, également la présence d'une couche oxydée sur chaque surface de plaquette.

Dans l'article "Transfert of 3-in GaAs film on silicon substrate by proton implantation process" (Electronics Letters, 1998, Vol 34, pages 408-409), Jalaguier A. et al. proposent un collage moléculaire hydrophile entre un substrat en GaAs et un substrat en silicium. La surface du substrat en GaAs est préalablement recouverte d'une couche d'oxyde de silicium (SiO₂) et subit une implantation protonique tandis que le substrat en silicium est recouvert d'une couche d'oxyde de silicium (SiO₂). Les surfaces des deux substrats sont ensuite polies et nettoyées avant d'être mises en contact à température ambiante, puis chauffées à une température comprise entre 400°C et 700°C. Un tel procédé de collage entre deux substrats semi-conducteurs différents n'est, cependant, pas satisfaisant dans la mesure où il nécessite encore la présence d'une couche d'oxyde de silicium à la surface du substrat en GaAs.

### Objet de l'invention

L'invention a pour but un procédé de collage de deux surfaces libres, respectivement de premier et second substrats différents remédiant aux inconvénients de l'art antérieur.

Plus particulièrement, l'invention a pour but un procédé permettant d'obtenir un collage de bonne qualité entre deux substrats différents, tout en assurant une liaison optique, thermique et électrique de qualité entre les deux substrats et ce, même lorsque le collage est réalisé à température ambiante.

L'invention a également pour but un procédé de collage facile à mettre en oeuvre et ne nécessitant pas d'ajout significatif de matière au niveau de l'interface entre les deux substrats, ni d'étape spécifique de polissage de surface.

Selon l'invention, ces buts sont atteints par les revendications annexées.

Plus particulièrement, ces buts sont atteints par le fait que le procédé comporte au moins les étapes suivantes :
- une étape de formation, sur la surface libre du premier substrat, d'une couche mono-moléculaire auto-assemblée constituée par un composé thiol de type SH-R-X, où -R est une chaîne carbonée et -X est un groupement choisi parmi -H, -OH et -COOH, au moins ladite surface libre du premier substrat étant constituée d'un matériau apte à former des liaisons moléculaires avec le groupement -SH du composé thiol,
- une étape de préparation de la surface libre du second substrat consistant à saturer la surface libre du second substrat en groupements -H si -X est un groupement -H ou en groupements -OH si -X est choisi parmi -OH et -COOH,
- une étape de mise en contact des deux surfaces libres.

Selon une caractéristique de l'invention, -X est constitué par le groupement - OH.

Selon une autre caractéristique de l'invention, -R est un groupe alkyle.

Selon un premier développement de l'invention, le premier substrat est un substrat semi-conducteur apte à former des liaisons moléculaires avec le groupement -SH du composé thiol. Plus particulièrement, le premier substrat est en arséniure de gallium ou en phosphure d'indium.

Selon un second développement de l'invention, le premier substrat semi-conducteur comporte une couche superficielle dont la surface libre forme la surface libre du premier substrat. Plus particulièrement, la couche superficielle est constituée par un matériau choisi parmi l'or, le cuivre, l'arséniure de gallium et le phosphure d'indium.

Selon un mode de réalisation préférentiel, le second substrat est constitué par un matériau choisi parmi le silicium, le verre, le quartz et la silice fondue.

### Description de modes particuliers de réalisation

Des premier et second substrats différents et, de préférence en matériaux semi-conducteurs, sont collés l'un à l'autre, en formant, d'une part, une couche mono-moléculaire auto-assemblée sur une surface libre du premier substrat et en préparant, d'autre part, la surface du second substrat destinée à être collée sur la surface libre du premier substrat. Plus particulièrement, le premier substrat est en arséniure de gallium (GaAs) ou en phosphure d'indium (InP) tandis que le second substrat est en silicium.

La couche mono-moléculaire auto-assemblée, également appelée SAM ("surface assembled monolayer"), est formée à la surface libre du premier substrat. Elle est constituée par un composé thiol de type SH-R-X, où -R est une chaîne carbonée et -X est un groupement choisi parmi -H, -OH et -COOH. La chaîne carbonée -R peut être saturée ou insaturée et elle peut contenir des cycles et/ou des hétéroatomes tels que l'azote et/ou l'oxygène. Le groupement -X est, de préférence, constitué par le groupement -OH.

Le composé thiol est, de préférence, choisi parmi les alcanethiols de type SH-R-H, les acides thiocarboxyliques de type SH-R-COOH et les thioalcools de type SH-R-OH. R est, plus particulièrement, un groupe alkyle de type -(CH₂)ₙ-, conférant à la couche mono-moléculaire des bonnes propriétés d'auto-organisation. Plus particulièrement, le composé thiol est choisi parmi les thioalcools de type SH-R-OH.

La formation d'une couche mono-moléculaire auto-assemblée constituée par un composé thiol sur la surface libre d'un substrat en GaAs ou en InP est connue de l'art antérieur, notamment pour modifier chimiquement et contrôler les interfaces semi-conductrices dans des dispositifs optoélectroniques, photovoltaïques ou photocatalytiques. Elle a été, plus particulièrement, décrite dans l'article "Préparation of Self-Assembled Monolayers on InP" de Y. Gu et al (Langmuir, Vol 11, N°6, 1995, pages 1849 à 1581), où une couche auto-assemblée constituée par un alcanethiol comprenant entre 5 et 18 atomes de carbone est formée sur un substrat en InP dopé n.

Ainsi, à titre d'exemple, une couche mono-moléculaire en composé thiol peut être formée sur la surface libre d'un substrat en InP en réalisant les étapes successives suivantes :
- Immersion du substrat en InP dans une solution d'acide fluorhydrique, de manière à désoxyder la surface libre du substrat, c'est-à-dire de manière à enlever l'éventuelle couche superficielle d'oxyde natif présente sur ladite surface,
- Rinçage du substrat en InP dans de l'eau dé-ionisée,
- Immersion du substrat dans une solution à base de thiol, la température du bain d'immersion pouvant être proche de la température ambiante, de l'ordre de 70°C ou de l'ordre de 140°C,
- Rinçages successifs dans un ou plusieurs solvants tels que le chloroforme, l'acétone et le méthanol, dans de l'eau dé-ionisée et/ou dans de l'eau ultra-pure.

La formation d'une telle couche mono-moléculaire permet, ainsi, de fonctionnaliser, en groupements -X et plus particulièrement en groupements -OH, la surface libre du premier substrat, grâce à l'établissement de liaisons moléculaires entre le matériau formant la surface libre du premier substrat et le groupement -SH du composé thiol. En effet, en immergeant le premier substrat dans une solution à base de thiol, les fonctions -SH des molécules de thiol se fixent, par chimisorption sur l'ensemble de la surface libre du premier substrat et il se crée des interactions de Van Der Waals entre les groupes alkyles des molécules de thiol adsorbées à la surface libre du premier substrat. Par ailleurs, plus la chaîne alkyle du composé thiol est longue, plus les interactions de Van Der Waals sont importantes. Grâce à ces interactions, les molécules de thiol, fixées par le groupement -SH à la surface libre du premier substrat, s'organisent de manière à être maintenues sensiblement perpendiculairement à la surface libre du premier substrat. Ainsi, les groupements -OH des molécules de thiol forment des groupements terminaux de la surface libre du premier substrat. La surface libre du premier substrat est alors dite fonctionnalisée par les groupements -OH.

Pour permettre le collage moléculaire du second substrat en silicium sur la surface libre fonctionnalisée par le groupement -X du premier substrat en InP ou en GaAs, le second substrat en silicium subit une préparation ou un traitement de surface permettant de saturer la surface libre du second substrat en groupements -H si -X est un groupement -H ou en groupements -OH si -X est choisi parmi -OH et -COOH. La saturation de la surface libre du second substrat, en groupements -H ou en groupements -OH, peut être réalisée par tout type de procédé connu.

Ainsi, pour un premier substrat en InP ou en GaAs, fonctionnalisé par le groupement -OH, la surface libre du second substrat est saturée en groupements -OH.

A titre d'exemple, la saturation en groupements -OH peut être obtenue en activant chimiquement la surface du substrat en silicium, par voie humide, notamment en formant, à la surface du substrat, une couche d'oxyde de silicium hydrophile. La couche d'oxyde de silicium peut être formée thermiquement à la surface libre du substrat en silicium ou bien elle peut être constituée par une couche d'oxyde natif. La couche d'oxyde est, ensuite, activée par traitement chimique par voie humide en immergeant, par exemple, le substrat dans de l'eau, de manière à former des liaisons silanols de type Si-OH à la surface du substrat. Des solutions acides ou basiques adaptées peuvent également être utilisées.

La saturation en groupements -OH d'un substrat en silicium peut également être obtenue ou améliorée suivant l'état de surface initial, par activation de surface par traitement plasma. Ainsi, un substrat en silicium, recouvert d'une couche d'oxyde natif ou thermique, peut être placé dans un plasma, produit par des décharges électriques dans un gaz à basse pression. Les surfaces traitées par plasma présentent alors, une réactivité chimique améliorée avec l'eau et les autres composées permettant de former des liaisons silanols. La saturation en groupements -OH peut également être obtenue par traitement par rayonnement ultraviolet sous ozone.

La mise en contact des surfaces libres des premier et second substrats, respectivement fonctionnalisée et saturée en groupements -OH, permet alors d'obtenir un collage moléculaire via les groupements -OH communs aux surfaces libres des deux substrats. En effet, les composés thiols du premier substrat permettent de fonctionnaliser la surface du premier substrat en groupements -OH tandis que la préparation de surface du second substrat permet de former des liaisons silanols à la surface libre du second substrat. Ces deux étapes permettent, alors, de créer des liaisons pendantes se terminant par des groupements -OH, à la surface libre des premier et second substrats. Puis, en mettant les deux surfaces en contact, les liaisons pendantes, respectivement des premier et second substrats, se combinent ensemble et créent une adhérence moléculaire entre les deux substrats. Le fait de fonctionnaliser la surface libre du premier substrat en groupements -X, et plus particulièrement en groupements -OH, et de saturer la surface libre du second substrat par les mêmes groupements -X permet, ainsi, d'obtenir un collage moléculaire entre deux substrats différents de bonne qualité, facile à mettre en oeuvre et n'endommageant pas les deux substrats. De plus, cela assure une liaison optique, thermique et électrique de qualité entre les deux substrats et ce, même lorsque le collage est réalisé à température ambiante. Par ailleurs, il n'est pas nécessaire d'ajouter de matière, telle qu'une colle, au niveau de l'interface entre les deux substrats, ni d'étape spécifique de polissage d'une ou des deux surfaces.

Un tel collage moléculaire est obtenu grâce à des phénomènes d'adhérence qui peuvent être comparés aux phénomènes d'adhérence modélisés dans l'article "A model for the silicon wafer bonding process" de R. Stengl et al, pour des plaquettes de silicium identiques. Ainsi, l'adhérence entre les deux substrats distincts peut être réalisée par formation de liaisons hydrogènes entre des molécules d'eau adsorbées aux surfaces libres des premier et second substrats. L'adsorption des molécules d'eau sur les surfaces libres des substrats est, généralement, obtenue en plongeant chaque substrat dans de l'eau, de manière à former une mono-couche d'eau à la surface libre de chaque substrat. Cette étape d'adhérence, pour un premier substrat en InP et un second substrat en silicium, peut, ainsi, être schématisée de la manière suivante : InP-SH-R-OH:(H₂O)₂ ··· (H₂O)₂ : OH-Si, les liaisons hydrogènes étant symbolisées par le signe " ··· " tandis que l'adsorption des molécules d'eau respectivement à la surface libre du substrat en InP et à la surface libre du substrat en silicium étant symbolisée par le signe " : ". L'eau adsorbée se diffuse, ensuite, à travers l'interface entre les deux surfaces, de manière à former une liaison covalente -O-Si, réalisée entre l'atome d'oxygène du premier substrat et le silicium du second substrat. La formation de la liaison covalente -O-Si permet, ainsi, le collage moléculaire entre les deux substrats, un tel phénomène de collage pouvant être schématisé de la manière suivante : InP-SH-R-O-Si.

La mise en contact entre les deux surfaces libres est, de préférence, réalisée, à température ambiante. Elle peut également être suivie d'un recuit, dit recuit de consolidation, réalisé par exemple à 200°C pendant 24 heures. Un tel recuit permet, alors, de renforcer l'adhérence entre les deux substrats.

A titre d'exemple, un substrat formé par une plaque d'InP de 50 mm de diamètre est collé sur un substrat en silicium de 100mm de diamètre et comportant une couche d'oxyde thermique de 1 µm d'épaisseur.

La surface du substrat en silicium est nettoyée et saturée en groupements -OH, par un traitement de type CARO (H₂O₂/H₂SO₄) ou par tout autre type de traitement adapté.

La plaque en InP est préparée de manière à former sur sa surface libre une couche mono-moléculaire constituée par le composé 2-mercaptoéthanol de formule semi-développée SH-(CH₂)₂-OH. Ainsi, la plaque en InP est désoxydée dans une solution d'acide fluorhydrique pendant 5 minutes avant d'être rincée à l'eau pendant 10 minutes, puis à l'isopropanol. Elle est, ensuite, plongée, pendant 20 heures, dans une solution pure de 2-mercaptoéthanol et rincée dans de l'isopropanol, puis dans de l'eau, avant d'être séchée.

La surface de la plaque en InP, ainsi fonctionnalisée est, ensuite, mise en contact avec la surface du substrat en silicium saturée en groupements -OH, en appliquant éventuellement une légère pression. Des observations par imagerie infrarouge ont permis de montrer que l'ensemble de la plaque en InP adhère au substrat en silicium.

Dans une variante de réalisation, avant l'immersion de la plaque en InP dans la solution de thiol, le thiol peut être désoxydé dans un bain à ultrasons, pendant 5 minutes. Cette étape de désoxydation du thiol permet d'éliminer une éventuelle oxydation du groupement -SH, favorisant, ainsi, la fixation du thiol sur la surface libre de la plaque en InP. Les énergies de collage ainsi obtenues entre la plaque en InP et le substrat en silicium sont comprises entre 100 et 120mJ/m², à température ambiante et entre 150 et 250 mJ/m² après un recuit de consolidation à 200°C pendant 24 heures.

L'invention n'est pas limitée aux modes de réalisation décrits ci-dessus. Plus particulièrement, le premier substrat peut être constitué par tout type de matériau différent du second substrat, dans la mesure où au moins la surface libre du premier substrat est constituée d'un matériau apte à former des liaisons moléculaires avec le groupement-SH du composé thiol. A titre d'exemple, le premier substrat peut comporter une couche superficielle dont la surface libre forme la surface libre du premier substrat et constituée par un matériau apte à former des liaisons moléculaires avec le groupement -SH du composé thiol. La couche superficielle est, par exemple, constituée par un matériau choisi parmi l'or, le cuivre, l'arséniure de gallium et le phosphure d'indium. Cette couche superficielle peut également être déposée ou épitaxiée sur le premier substrat.

De plus, dans le cas d'un composé thioalcool, le substrat en silicium peut être remplacé par un substrat en silicium comportant préalablement une couche d'oxyde de silicium ou par tout type de substrat sur lequel est susceptible d'être formée une couche d'oxyde permettant la saturation de la surface libre en groupements -OH, telle que la silice fondue, le quartz ou le verre (par exemple en borophosphosilicate).

## Revendications

1. Procédé de collage de deux surfaces libres, respectivement de premier et second substrats différents, **caractérisé en qu'**il comporte au moins les étapes suivantes :
- une étape de formation, sur la surface libre du premier substrat, d'une couche mono-moléculaire auto-assemblée constituée par un composé thiol de type SH-R-X, où -R est une chaîne carbonée et -X est un groupement choisi parmi -H, -OH et -COOH, au moins ladite surface libre du premier substrat étant constituée d'un matériau apte à former des liaisons moléculaires avec le groupement -SH du composé thiol,
- une étape de préparation de la surface libre du second substrat consistant à saturer la surface libre du second substrat en groupements -H si -X est un groupement -H ou en groupements -OH si -X est choisi parmi -OH et -COOH,
- une étape de mise en contact des deux surfaces libres.

2. Procédé selon la revendication 1, **caractérisé en ce que** -X est constitué par le groupement -OH.

3. Procédé selon l'une des revendications 1 et 2, **caractérisé en ce que** -R est un groupe alkyle.

4. Procédé selon l'une quelconque des revendications 1 à 3, **caractérisé en ce que** le premier substrat est un substrat semi-conducteur apte à former des liaisons moléculaires avec le groupement -SH du composé thiol.

5. Procédé selon la revendication 4, **caractérisé en ce que** le premier substrat est en arséniure de gallium ou en phosphure d'indium.

6. Procédé selon l'une quelconque des revendications 1 à 3, **caractérisé en ce que** le premier substrat comporte une couche superficielle dont la surface libre forme la surface libre du premier substrat.

7. Procédé selon la revendication 6, **caractérisé en ce que** la couche superficielle est constituée par un matériau choisi parmi l'or, le cuivre, l'arséniure de gallium et le phosphure d'indium.

8. Procédé selon l'une quelconque des revendications 1 à 7, **caractérisé en ce que** le second substrat est constitué par un matériau choisi parmi le silicium, le verre, le quartz et la silice fondue.

9. Procédé selon l'une quelconque des revendications 2 à 8, **caractérisé en ce que** l'étape de saturation de la surface libre du second substrat en groupements -OH est réalisée par activation chimique par voie humique.

10. Procédé selon l'une quelconque des revendications 2 à 8, **caractérisé en ce que** l'étape de saturation de la surface libre du second substrat en groupements -OH est réalisée par traitement par plasma.

11. Procédé selon l'une quelconque des revendications 2 à 8, **caractérisé en ce que** l'étape de saturation de la surface libre du second substrat en groupements -OH est réalisée par traitement par rayonnement ultraviolet sous ozone.

12. Procédé selon l'une quelconque des revendications 1 à 11, **caractérisé en ce que** la mise en contact des deux surfaces est réalisée à une température proche de la température ambiante.

13. Procédé selon l'une quelconque des revendications 1 à 12, **caractérisé en ce que** l'étape de mise en contact des deux surfaces est suivie d'une étape de recuit.

## Claims

1. Method for bonding two free surfaces, respectively of first and second different substrates, **characterized in that** it comprises at least the following steps:
- a formation step, on the free surface of the first substrate, of a self-assembled mono-molecular layer consisting of a thiol compound of the SH-R-X type, where -R is a carbonaceous chain and -X is a group selected among -H, -OH and -COOH, at least said free surface of the first substrate being constituted by a material able to form molecular bonds with the -SH group of the thiol compound,
- a step of preparing the free surface of the second substrate consisting in saturating the free surface of the second substrate with -H groups if -X is a -H group or with -OH groups if -X is selected from -OH and -COOH,
- a step of placing the two free surfaces in contact.

2. Method according to claim 1, **characterized in that** -X is the -OH group.

3. Method according to one of the claims 1 and 2, **characterized in that** -R is an alkyl group.

4. Method according to any one of the claims 1 to 3, **characterized in that** the first substrate is a semi-conducting substrate able to form molecular bonds with the -SH group of the thiol compound.

5. Method according to claim 4, **characterized in that** the first substrate is made of gallium arsenide or indium phosphide.

6. Method according to any one of the claims 1 to 3, **characterized in that** the first substrate comprises a superficial layer the free surface whereof forms the free surface of the first substrate.

7. Method according to claim 6, **characterized in that** the superficial layer is constituted by a material selected among gold, copper, gallium arsenide and indium phosphide.

8. Method according to any one of the claims 1 to 7, **characterized in that** the second substrate is constituted by a material selected among silicon, glass, quartz and silica glass.

9. Method according to any one of the claims 2 to 8, **characterized in that** the saturation step of the free surface of the second substrate with -OH groups is performed by wet method chemical activation.

10. Method according to any one of the claims 2 to 8, **characterized in that** the saturation step of the free surface of the second substrate with -OH groups is performed by plasma treatment.

11. Method according to any one of the claims 2 to 8, **characterized in that** the saturation step of the free surface of the second substrate with -OH groups is performed by ultraviolet radiation treatment under ozone.

12. Method according to any one of the claims 1 to 11, **characterized in that** placing of the two surfaces in contact is performed at a temperature close to the ambient temperature.

13. Method according to any one of the claims 1 to 12, **characterized in that** the step of placing the two surfaces in contact is followed by an annealing step.

## Patentansprüche

1. Verfahren zum Verkleben zweier freier Oberflächen jeweils eines ersten und eines zweiten Substrats, die voneinander verschieden sind, **dadurch gekennzeichnet, dass** es mindestens folgende Schritte umfasst:
- einen Schritt der Bildung einer monomolekularen, selbstassemblierenden Schicht aus einer Thiolverbindung der Art SH-R-X, wobei -R eine Kohlenstoffkette und -X eine Gruppe ist, die aus -H, -OH und -COOH ausgewählt ist, wobei mindestens die freie Oberfläche des ersten Substrats aus einem Material besteht, das geeignet ist, molekulare Bindungen mit der -SH-Gruppe der Thiolverbindung einzugehen,
- einen Schritt der Vorbereitung der freien Oberfläche des zweiten Substrats, der darin besteht, die freie Oberfläche des zweiten Substrats an -H-Gruppen zu sättigen, wenn -X eine -H-Gruppe ist, oder an -OH-Gruppen zu sättigen, wenn -X aus -OH und -COOH ausgewählt ist,
- einen Schritt, in dem die beiden freien Oberflächen miteinander in Kontakt gebracht werden.

2. Verfahren nach Anspruch 1, **dadurch gekennzeichnet, dass** -X von der - OH-Gruppe gebildet wird.

3. Verfahren nach einem der Ansprüche 1 und 2, **dadurch gekennzeichnet, dass** -R eine Alkylgruppe ist.

4. Verfahren nach einem der Ansprüche 1 bis 3, **dadurch gekennzeichnet, dass** das erste Substrat ein Halbleitersubstrat ist, das geeignet ist, molekulare Bindungen mit der -SH-Gruppe der Thiolverbindung einzugehen.

5. Verfahren nach Anspruch 4, **dadurch gekennzeichnet, dass** das erste Substrat aus Galliumarsenid oder Indiumphosphid besteht.

6. Verfahren nach einem der Ansprüche 1 bis 3, **dadurch gekennzeichnet, dass** das erste Substrat eine Oberflächenschicht aufweist, deren freie Oberfläche die freie Oberfläche des ersten Substrats bildet.

7. Verfahren nach Anspruch 6, **dadurch gekennzeichnet, dass** die Oberflächenschicht aus einem Material besteht, das aus Gold, Kupfer, Galliumarsenid und Indiumphosphid ausgewählt wurde.

8. Verfahren nach einem der Ansprüche 1 bis 7, **dadurch gekennzeichnet, dass** das zweite Substrat aus einem Material besteht, das aus Silizium, Glas, Quarz und Quarzglas ausgewählt ist.

9. Verfahren nach einem der Ansprüche 2 bis 8, **dadurch gekennzeichnet, dass** der Schritt der Sättigung der freien Oberfläche des zweiten Substrats an -OH-Gruppen durch chemische Aktivierung im Feuchtverfahren erfolgt.

10. Verfahren nach einem der Ansprüche 2 bis 8, **dadurch gekennzeichnet, dass** der Schritt der Sättigung der freien Oberfläche des zweiten Substrats an -OH-Gruppen durch Plasmabehandlung erfolgt.

11. Verfahren nach einem der Ansprüche 2 bis 8, **dadurch gekennzeichnet, dass** der Schritt der Sättigung der freien Oberfläche des zweiten Substrats an -OH-Gruppen durch UV-Bestrahlung unter Ozon erfolgt.

12. Verfahren nach einem der Ansprüche 1 bis 11, **dadurch gekennzeichnet, dass** die beiden Flächen bei einer Temperatur miteinander in Kontakt gebracht werden, die nahe der Umgebungstemperatur liegt.

13. Verfahren nach einem der Ansprüche 1 bis 12, **dadurch gekennzeichnet, dass** auf den Schritt, in dem die beiden freien Oberflächen miteinander in Kontakt gebracht werden, ein Glühschritt folgt.
